(19) Europäisches Patentamt / European Patent Office / Office européen des brevets

(11) **EP 3 084 910 B1**

(12) **FASCICULE DE BREVET EUROPEEN**

(45) Date de publication et mention de la délivrance du brevet:
**09.05.2018 Bulletin 2018/19**

(21) Numéro de dépôt: **14814829.9**

(22) Date de dépôt: **15.12.2014**

(51) Int Cl.:
**H02J 3/14** (2006.01)

(86) Numéro de dépôt international:
**PCT/EP2014/077815**

(87) Numéro de publication internationale:
**WO 2015/091387 (25.06.2015 Gazette 2015/25)**

(54) **PROCEDE DE STABILISATION D'UN RESEAU ELECTRIQUE PAR DELESTAGE DE CHARGES**

LASTABWURFSVERFAHREN ZUR STABILISIERUNG EINES ELEKTRISCHEN NETZES

METHOD TO STABILIZE A POWER GRID USING LOAD SHEDDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1362664**

(43) Date de publication de la demande:
**26.10.2016 Bulletin 2016/43**

(73) Titulaire: **Institut Polytechnique de Grenoble 38000 Grenoble (FR)**

(72) Inventeurs:
• **LEBEL, Gaspard**
  F-38250 Lans En Vercors (FR)
• **HADJSAID, Nouredine**
  F-38100 Grenoble (FR)
• **CAIRE, Raphaël**
  F-38100 Grenoble (FR)

(74) Mandataire: **Cabinet Beaumont**
**4, Place Robert Schuman**
**B.P. 1529**
**38025 Grenoble Cedex 1 (FR)**

(56) Documents cités:
WO-A1-97/37415          GB-A- 2 361 118
GB-A- 2 426 878          US-A1- 2004 254 688
US-A1- 2009 299 540      US-A1- 2012 053 744

• **D.L.H. AIK: "A General-Order System Frequency Response Model Incorporating Load Shedding: Analytic Modeling and Applications", IEEE TRANSACTIONS ON POWER SYSTEMS, vol. 21, no. 2, 31 mai 2006 (2006-05-31), pages 709-717, XP055134412, ISSN: 0885-8950, DOI: 10.1109/TPWRS.2006.873123**

**Description**

La présente demande de brevet revendique la priorité de la demande de brevet français FR13/62664 qui sera considérée comme faisant partie intégrante de la présente description.

Domaine

La présente demande concerne un procédé de stabilisation d'un réseau électrique par délestage de charges.

Exposé de l'art antérieur

Pour alimenter des sites consommateurs d'énergie électrique, des producteurs centralisés d'énergie électrique injectent de la puissance électrique sur un réseau haute tension, c'est-à-dire ayant des tensions supérieures à 50 kV (HTB). Des premiers transformateurs transfèrent cette haute tension sur des sous-réseaux publics moyenne tension, c'est-à-dire ayant des tensions comprises entre 20 et 50 kV. Les utilisateurs sont connectés, ou bien, à des sous-réseaux publics basse tension - c'est le cas notamment des installations domestiques - ou bien, à des sous-réseaux privés moyenne tension - c'est le cas notamment d'utilisateurs industriels. On appellera ici sites consommateurs les lieux de consommation d'électricité connectés à un sous-réseau privé moyenne tension ou à un sous-réseau public basse tension.

Lorsque la puissance absorbée par les sites consommateurs augmente sans que les producteurs n'augmentent la puissance injectée sur le réseau, l'écart entre la puissance consommée et la puissance injectée se traduit par une baisse de la fréquence du réseau par rapport à une fréquence nominale de fonctionnement (par exemple 50 ou 60 Hz).

Afin de répondre rapidement à une augmentation de puissance consommée, les producteurs conservent une réserve de puissance mobilisable (mais coûteuse). Ainsi lorsqu'une baisse de fréquence est constatée sur le réseau, cette réserve est injectée sur le réseau pour enrayer la déviation de fréquence puis annuler l'écart entre puissance consommée et puissance produite. En pratique, il est souhaitable que l'écart entre la puissance produite et la puissance consommée n'entraîne pas de variation notable de la fréquence par rapport à la fréquence nominale de fonctionnement (0,4 % sur les réseaux continentaux interconnectés).

Lorsque la réserve de puissance injectable disponible n'est pas suffisante pour satisfaire une augmentation de la puissance consommée ou que cette réserve n'est pas injectée suffisamment rapidement sur le réseau, un moyen supplémentaire pour réduire l'écart entre puissance produite et puissance consommée consiste à délester le réseau de certaines de ses charges. Les délestages sont effectués à partir du moment où la fréquence de fonctionnement du réseau chute en dessous d'une certaine fréquence seuil. Ces délestages sont effectués de manière brutale au niveau des sous-réseaux.

La figure 1 ci-jointe correspond à la figure 1 du brevet US 6 314 378 et représente un réseau électrique dans lequel sont effectués des délestages de charges.

Dans cette figure, un réseau de distribution électrique 2 alimente des sous-réseaux utilisateurs par l'intermédiaire de sous-stations 4. Chaque sous-station 4 comprend un transformateur 6 adaptant la tension du réseau 2 en des tensions propres à alimenter des sous-réseaux auxquels sont connectés des sites consommateurs tels que des maisons 8, des immeubles 10 et des usines 12. Chaque sous-station 4 comprend en outre un relais 14. Un gestionnaire de réseau 18 disposé au niveau réseau calcule des conditions de délestage et les programme dans les relais 14 par l'intermédiaire de moyens de communication 20.

Chaque relais 14 vérifie si les conditions de délestage calculées par le gestionnaire de réseau 18 sont atteintes ou non. Si l'état du réseau atteint les conditions de délestage d'un relais, ce relais commande systématiquement le délestage des charges délestables des utilisateurs connectés au sous-réseau correspondant.

On constate que la puissance ainsi délestée varie par à-coups et peut produire des instabilités sur le réseau.

La demande de brevet américain N° 2009/0299540 concerne un système de délestage de charges et un procédé pour stabiliser un réseau électrique par délestage de charges.

L'article "A General-Order System Frequency Response Model Incorporating Load Shedding: Analytic Modeling and Applications" de D.L.H. AIK, publié le 31 mai 2006 dans IEEE Transactions On Power Systems, volume 21, numéro 2, concerne une modélisation de la réponse en fréquence d'un réseau électrique isolé incluant un système de délestage de charges.

Résumé

Il existe donc un besoin d'un procédé de stabilisation d'un réseau électrique par délestage de charges de sorte que la variation de puissance consommée sur le réseau suite à des délestages de charges présente une réponse dynamique la plus adéquate pour une stabilisation efficace du réseau électrique, c'est-à-dire qui présente le moins d'à-coups possible.

Ainsi, un mode de réalisation prévoit un procédé de stabilisation entre une fréquence haute, fa, et une fréquence basse, fb, d'un réseau électrique alimentant plusieurs sous-réseaux, chaque sous-réseau comprenant un gestionnaire de sous-réseau et alimentant une pluralité, N, de sites consommateurs, chaque site, j, comportant des charges délestables, le procédé comprenant pour chaque sous-réseau les étapes suivantes : assurer une communication entre chaque site et son gestionnaire de sous-réseau ; mesurer périodiquement au niveau de chaque site la valeur de la puissance délestable instantanée consommée ; déduire pour chaque site une puissance délestable estimée, $P_j$, pour une période à venir ; fixer un ordre 1 à N de déconnexion des charges délestables ; et envoyer à chaque site j une fréquence seuil, $fs_j$, telle que des charges délestables de ce site sont débranchées quand la fréquence du réseau descend sous la fréquence de seuil $fs_j$, dans lequel le gestionnaire de sous-réseau calcule les fréquences seuils à partir des puissances délestables estimées de sorte que la variation des puissances délestées en fonction de la fréquence soit sensiblement linéaire.

Selon un mode de réalisation, le procédé comprend en outre les étapes suivantes : calculer et associer à chaque site, j, un intervalle de fréquence, $[F_{min(j)}, F_{max(j)}]$, en appliquant les formules suivantes :

$$F_{max(j)} = fa + (fb - fa) \times \left( \sum_{i=1}^{j-1} P_i \middle/ \sum_{i=1}^{N} P_i \right)$$

$$F_{min(j)} = fa + (fb - fa) \times \left( \sum_{i=1}^{j} P_i \middle/ \sum_{i=1}^{N} P_i \right)$$

où $P_i$ est la puissance délestable estimée du site d'indice i ; et choisir les fréquences seuils à l'intérieur de l'intervalle $[F_{min(j)}, F_{max(j)}]$.

Selon un mode de réalisation, la fréquence de seuil $fs_j$ de chaque site j (28) est choisie au milieu de l'intervalle $[F_{min(j)}, F_{max(j)}]$.

Selon un mode de réalisation, l'ordre 1 à N de déconnexion des charges délestables est périodiquement modifié.

Selon un autre aspect, on prévoit un système de stabilisation d'un réseau électrique alimentant plusieurs sous-réseaux, chaque sous-réseau alimentant une pluralité, N, de sites consommateurs, chaque site, j, comportant des charges délestables, ce système comprenant : au niveau de chaque site, au moins un compteur pour mesurer périodiquement la valeur de la puissance délestable instantanée, et un commutateur de déconnexion des charges délestables quand la fréquence du réseau chute en dessous d'une fréquence seuil, $fs_j$ ; un gestionnaire de sous-réseau associé à chaque sous-réseau comprenant des moyens pour calculer des fréquences seuils de sorte que la variation des puissances délestées en fonction de la fréquence soit sensiblement linéaire ; des moyens de communication entre chaque gestionnaire de sous-réseau et les sites associés ; et au niveau de chaque site ou au niveau du gestionnaire, des moyens de détermination sur une période d'une puissance délestable estimée, $P_j$, le calcul des fréquences seuils étant effectué à partir des puissances délestables estimées.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

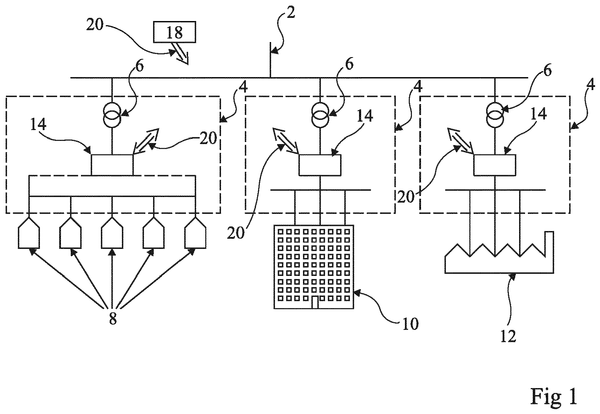

la figure 1, décrite précédemment, correspond à la figure 1 du brevet US 6 314 378 représentant un réseau électrique dans lequel sont effectués des délestages de charges,
la figure 2 représente schématiquement un exemple de réseau électrique adapté à une stabilisation linéaire par délestage de charges, et
les figures 3 et 4 illustrent des exemples d'évolution de la puissance délestée en fonction de la fréquence du réseau.

Par souci de clarté, de mêmes éléments ont été désignés par de mêmes références aux différentes figures.

Description détaillée

On propose ici de calculer les conditions de déconnexion de charges délestables en ayant préalablement connaissance de la puissance effectivement consommée par ces charges et donc de la variation de puissance que chaque délestage de charges entraînerait. On propose aussi d'effectuer le calcul des conditions optimales de délestage au niveau des sous-réseaux. On veille à ce que, dans chaque sous-réseau, la variation de la puissance délestée en fonction de la variation de fréquence du réseau soit aussi linéaire que possible. Par superposition des variations de chaque sous-réseau, on obtient une variation de puissance délestée au niveau réseau aussi linéaire que possible. Ainsi les délestages sont effectués de manière progressive, de la même façon que les variations de puissance injectée sur un réseau électrique sont couramment commandées entre les divers lieux de production d'énergie électrique centralisée. Bien que cela ne soit pas décrit ici, on comprendra que les opérations de délestage servent à éviter la fourniture d'une puissance supplémentaire coûteuse par les producteurs. Quand on s'approche du délestage maximum possible, le recours à une puissance supplémentaire devient nécessaire.

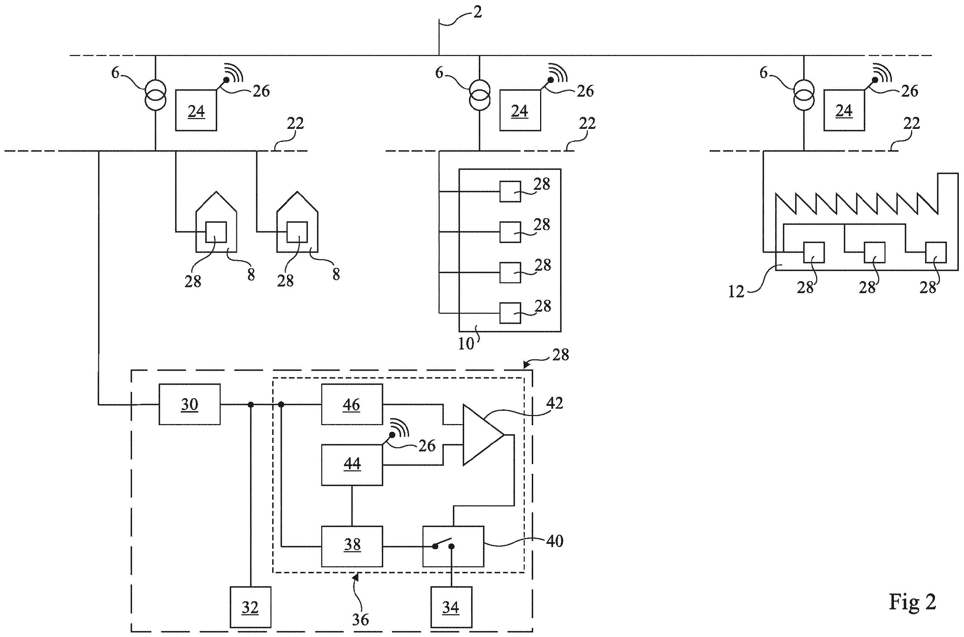

La figure 2 représente schématiquement un exemple de réseau électrique adapté à une stabilisation linéaire par délestage de charges.

Un réseau de distribution électrique 2 alimente des sous-réseaux utilisateurs 22 par l'intermédiaire de transformateurs 6. Chaque sous-réseau 22 est associé à un gestionnaire de sous-réseau 24, par exemple un concentrateur de données, comportant des moyens de communication 26. On pourra prévoir un gestionnaire de sous-réseau par sous-réseau ou des gestionnaires de sous-réseau centralisés. Dans ce dernier cas, chaque gestionnaire de sous-réseau centralisé pourra gérer indépendamment plusieurs sous-réseaux. Les sous-réseaux 22 alimentent des sites 28 consommateurs d'énergie électrique, par exemple au niveau de maisons 8, d'immeubles 10 ou d'usines 12.

Un site 28 seulement est représenté de façon détaillée, en bas à gauche de la figure 2. Ce site comprend un compteur principal 30, des charges non délestables 32, des charges délestables 34 et un contrôleur de charges délestables 36. Le compteur principal 30 est connecté à un sous-réseau 22 et est relié d'une part aux charges délestables 34 par l'intermédiaire d'un contrôleur de charges délestables 36 et, d'autre part, aux charges non délestables 32. Les charges délestables 34 sont, par exemple, des radiateurs électriques, des chauffe-eaux électriques, des systèmes de climatisation ou d'autres charges électriques dont l'interruption temporaire n'affecte pas le bien-être du consommateur.

Le contrôleur de charges délestables 36 comprend :

- un compteur secondaire 38 relié au compteur principal 30 et connecté aux charges délestables 34 par l'intermédiaire d'un interrupteur 40,
- un comparateur de fréquences 42 dont la sortie est reliée à une entrée de commande de l'interrupteur 40 et dont les deux entrées sont reliées respectivement à un module de contrôle 44 et à un fréquencemètre 46, le fréquencemètre étant relié au sous-réseau 22, par exemple par l'intermédiaire du compteur principal 30, et
- des moyens de communication 26 reliés au module de contrôle 44, le module de contrôle étant lui-même relié au compteur secondaire 38.

Le compteur principal 30 mesure la puissance consommée par l'ensemble des charges 32 et 34 du site 28. Le compteur secondaire 38 mesure la puissance délestable instantanée, c'est-à-dire la puissance effectivement consommée par les seules charges délestables 34. Cette mesure est transmise au module de contrôle 44 qui l'envoie au gestionnaire de sous-réseau 24 correspondant par l'intermédiaire des moyens de communication 26. Le gestionnaire déduit de cette mesure une puissance délestable estimée pour un intervalle de temps qui suit cette mesure, par exemple quinze minutes. La puissance délestable estimée de chaque site consommateur peut être déterminée, par exemple, à partir de la puissance délestable instantanée et en tenant compte d'un historique de consommation des charges délestables du site et/ou du taux de variation de puissance délestable instantanée du site. La détermination de la puissance délestable estimée peut également être effectuée au niveau de chaque site.

Au niveau de chaque gestionnaire de sous-réseau 24, une fréquence seuil est calculée pour chaque site associé au gestionnaire de sous-réseau 24 et est envoyée au module de contrôle 44 de ce site.

Le comparateur 42 du site compare la fréquence seuil reçue par le module de contrôle 44 à la fréquence de fonctionnement du réseau mesurée par le fréquencemètre 46. Si la fréquence mesurée chute en dessous de la fréquence seuil, le comparateur 42 commande l'ouverture de l'interrupteur 40, c'est à dire la déconnexion des charges délestables 34.

Afin de limiter au maximum les à-coups de puissance sur le réseau électrique et afin de stabiliser la réponse du réseau électrique suite par exemple à un incident de grande ampleur, chaque fréquence seuil est calculée de façon à assurer une variation régulièrement échelonnée de la puissance délestée en fonction de la fréquence du réseau, par exemple, comme cela est décrit ci-après.

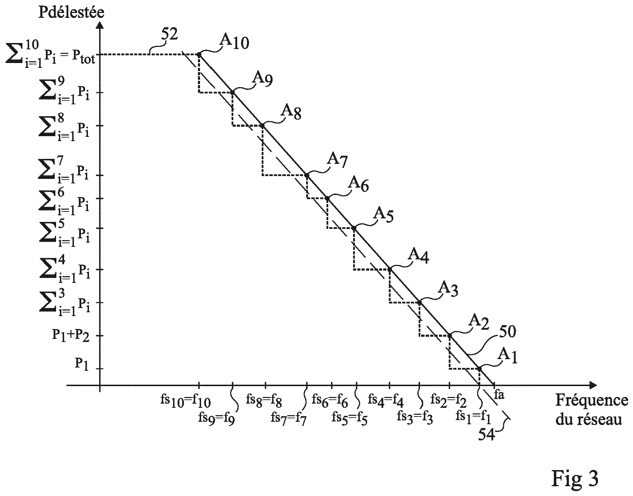

La figure 3 illustre un premier exemple de l'évolution de la puissance délestée sur un sous-réseau en fonction de la fréquence du réseau.

On considère, à titre d'exemple, un sous-réseau 22 tel que décrit en figure 2 comprenant dix sites 28 numérotés de 1 à 10. On souhaite effectuer des délestages de charges dès que la fréquence du réseau chute en dessous d'une valeur haute, fa (par exemple 49, 800 Hz pour un réseau à 50 Hz), et de sorte que tous les délestages possibles soient effectués quand la fréquence du réseau atteint une valeur basse, fb (par exemple 49,500 Hz pour un réseau à 50 Hz).

Le site numéroté 1 sera délesté en premier, puis le site numéroté 2 et ainsi de suite jusqu'au site numéroté 10.

Au niveau de chaque site 28, numéroté j, la puissance délestable instantanée des charges délestables 34 est mesurée et la valeur mesurée est envoyée au gestionnaire de sous-réseau 24. Le gestionnaire de sous-réseau calcule notamment la puissance délestable estimée, $P_j$, de chaque site numéroté j et la puissance maximale $P_{tot}$ qui peut être délestée sur le sous-réseau et qui est la somme des puissances délestables estimées de tous les sites 28 du sous-réseau.

Afin d'avoir une variation de puissance délestée aussi linéaire que possible dans l'intervalle [fb,fa], on souhaite que la courbe d'évolution de la puissance délestée sur le sous-réseau en fonction de la fréquence du réseau s'approche le plus possible d'une droite 50 ayant une pente égale à $P_{tot}$/(fb-fa).

Le gestionnaire de sous-réseau 24 calcule d'abord la fréquence $f_1$ du point $A_1$ d'ordonnée $P_1$ de la droite 50. Après cela, le gestionnaire de sous-réseau 24 calcule la fréquence $f_2$ du point $A_2$ d'ordonnée $P_1+P_2$ de la droite 50.

Plus généralement, le gestionnaire de sous-réseau calcule les fréquences $f_j$ des points $A_j$ d'ordonnées $\sum_{i=1}^{j} P_i$ de la droite 50.

Le gestionnaire de sous-réseau 24 envoie à chacun des sites 28 numéroté j une fréquence seuil $fs_j$ égale à la fréquence $f_j$ calculée précédemment. Ainsi, chaque site j déleste ses charges délestables 34 quand la fréquence du réseau atteint la valeur $fs_j$. Le délestage est de préférence instantané afin d'éviter le recours à des procédés de type RoCoF ("Rate of Change of Frequency" - taux de changement de fréquence), tels qu'utilisés dans le brevet US 6 314 378 susmentionné.

La courbe 52 représente l'évolution réelle de la puissance délestée sur le sous-réseau en fonction de la fréquence du réseau. La courbe 52 peut être approximée par une droite 54 très proche de la droite 50. On a bien une variation quasi linéaire de la puissance délestée en fonction de la fréquence du réseau.

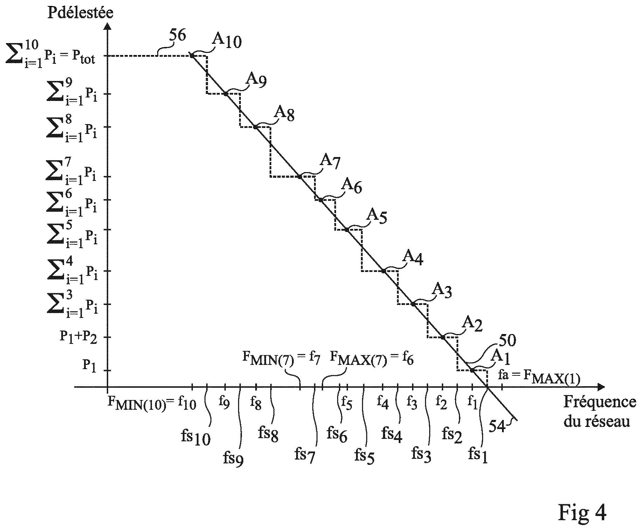

La figure 4 illustre un deuxième exemple de l'évolution de la puissance délestée sur un sous-réseau en fonction de la fréquence du réseau.

A titre d'exemple, le sous-réseau considéré ici est le même que celui décrit en relation avec la figure 3, c'est-à-dire qu'il est associé aux dix mêmes sites 28 numérotés dans le même ordre. Pour chaque site numéroté j, la puissance délestable estimée $P_j$ est la même qu'en figure 3. On souhaite que la courbe de la puissance délestée sur le sous-réseau en fonction de la fréquence du réseau s'approche le plus possible de la droite 50 de pente $P_{tot}$/(fb-fa).

Comme cela a été décrit précédemment en relation avec la figure 3, le gestionnaire de sous-réseau 24 calcule les fréquences $f_1$ à $f_{10}$.

Le gestionnaire 24 associe ensuite à chaque site j un intervalle de fréquence [$F_{min(j)}$, $F_{max(j)}$] tel que pour tout j compris entre 1 et 10 :

$$F_{min(j)} = f_j,$$

$$F_{max(j)} = F_{min(j-1)},$$

si j≥2 et

$$F_{max(1)} = fa.$$

Pour chaque site j, le gestionnaire de sous-réseau 24 choisit une fréquence seuil $fs_j$ au milieu de l'intervalle [$F_{min(j)}$, $F_{max(j)}$].

Le gestionnaire de sous-réseau 24 envoie à chacun des sites 28 numéroté j la fréquence seuil $fs_j$ calculée. Ainsi, chaque site j déleste les charges délestables 34 à la fréquence $fs_j$.

La courbe 56 représente l'évolution réelle de la puissance délestée sur le sous-réseau en fonction de la fréquence du réseau. La courbe 56 peut être approximée par une droite qui se confond avec la droite 50. On a bien une variation quasi linéaire de la puissance délestée en fonction de la fréquence du réseau.

On a décrit en relation avec les figures 3 et 4 deux façons de calculer des fréquences seuils. Plus généralement, la fréquence seuil $fs_j$ de chaque site j peut être choisie dans un intervalle de fréquence [$F_{min(j)}$, $F_{max(j)}$]. Les valeurs de $F_{min(j)}$ et de $F_{max(j)}$ peuvent être calculées par le gestionnaire de sous-réseau sur la base des formules suivantes :

$$F_{max(j)} = fa + (fb - fa) \times \left( \sum_{i=1}^{j-1} P_i \Big/ \sum_{i=1}^{N} P_i \right) \quad (1)$$

$$F_{min(j)} = fa + (fb - fa) \times \left( \sum_{i=1}^{j} P_i \bigg/ \sum_{i=1}^{N} P_i \right) \quad (2)$$

Dans la formule (1), on considère que la somme des puissances délestables estimées $P_i$ pour i allant de 1 à j-1 est nulle quand j=1.

Des modes de réalisation particuliers ont été décrits. Diverses variantes et modifications apparaîtront à l'homme de l'art.

L'ordre dans lequel les N sites 28 délestent leurs charges délestables peut être modifié par le gestionnaire de sous-réseau 24, par exemple pour ne pas défavoriser un site qui serait toujours délesté le premier, ou pour favoriser le délestage d'un site plutôt qu'un autre. Ainsi, cet ordre pourra être choisi de manière aléatoire et revu périodiquement, par exemple toutes les semaines, afin d'obtenir une non discrimination des charges participant au délestage.

Afin de calculer la puissance délestable estimée $P_j$ de chaque site consommateur j, la puissance délestable instantanée au niveau de chaque site peut être mesurée périodiquement ou suite à une requête provenant, par exemple, du gestionnaire de sous-réseau 24.

Au niveau du gestionnaire de sous-réseau, le calcul des fréquences seuils est réalisé plusieurs fois au cours du temps pour tenir compte des changements de puissances délestables instantanées consommées par les charges délestables du sous-réseau et pour tenir compte, par exemple, d'une nouvelle consigne d'intervalle [fb,fa] ou de paramètres comme par exemple l'heure et/ou la date auxquelles est effectué le calcul des fréquences seuils. A titre d'exemple, le calcul des fréquences seuils d'un sous-réseau est fait à intervalles de temps réguliers ou suite à une requête, par exemple d'un site 28 dont la puissance délestable estimée a fortement changé. On peut également prévoir de calculer des fréquences seuils dans un intervalle de fréquence différent pour chaque sous-réseau de sorte que l'union de ces intervalles corresponde à l'intervalle [fa,fb] sur lequel on souhaite stabiliser en fréquence le réseau électrique.

Ainsi, les fréquences seuils sont adaptées en temps réel à l'état réel de la consommation de puissance délestable sur le réseau, ces fréquences seuils étant recalculées afin de suivre l'évolution de la puissance délestable réellement consommée. Cela permet des délestages de charges, au niveau de chaque sous-réseau, entraînant une variation aussi linéaire que possible de la puissance délestée en fonction de la fréquence du réseau. Par superposition des variations linéaires de chaque sous-réseau, on obtient une variation au niveau réseau, elle aussi linéaire, de la puissance délestée en fonction de la fréquence.

A titre d'exemple, le gestionnaire de sous-réseau 24 ainsi que le contrôleur de charges délestables 36 peuvent comprendre un ou plusieurs processeurs et un ou plusieurs supports de stockage non transitoire lisibles par ordinateur. Les modes de réalisations décrits ci-dessus en relation avec les figures 2 à 4 peuvent être mis en oeuvre de plusieurs façons, par exemple, à l'aide d'un circuit dédié, d'un logiciel ou d'une combinaison de ceux-ci. Lorsqu'ils sont mis en oeuvre par logiciel, le code logiciel peut être exécuté sur n'importe quel processeur approprié (par exemple, un microprocesseur) ou un ensemble de processeurs, qu'ils soient prévus dans un dispositif de calcul unique ou répartis entre plusieurs dispositifs de calcul.

Les moyens de communication 26 peuvent être des moyens sans fil, filaire, ou encore par courant porteur sur les lignes d'un sous-réseau. Les moyens de communication mettent en oeuvre, par exemple, une communication point à point ou multipoint.

Les comparateurs 42 sont également prévus pour commander la reconnexion des charges délestables quand la fréquence du réseau repasse au dessus d'une fréquence seuil de reconnexion qui peut être distincte de la fréquence seuil de déconnexion. Chaque comparateur 42, peut être un comparateur à hystérésis pour éviter que l'interrupteur 40 oscille entre l'état ouvert et l'état fermé lorsque la fréquence du réseau est proche de la fréquence seuil.

Bien que l'on ait décrit au niveau de chaque site consommateur un contrôleur de charges délestables 36 délestant l'ensemble de ses charges délestables à une fréquence seuil, on pourrait prévoir au niveau de chaque site plusieurs compteurs de charges délestables dont chacun est associé à une fréquence seuil différente. Dans ce dernier cas, le contrôleur de charges délestables 36 peut être adapté à communiquer avec des charges délestables communicantes. Ces charges délestables communicantes comprennent leurs propres moyens de déconnexion du réseau et, lorsque la fréquence du réseau chute en dessous d'une fréquence seuil, les charges délestables communicantes associées à cette fréquence seuil se déconnectent du réseau.

Selon un avantage, le fait d'utiliser plusieurs gestionnaires de sous-réseau 24 associés chacun à un sous-réseau plutôt qu'un gestionnaire unique pour l'ensemble du réseau conduit à des réalisations pratiques plus simples à mettre en place et au calcul des seuils, par chaque gestionnaire de sous-réseau, d'un nombre limité de sites consommateurs.

On a décrit ici des modes de réalisation d'un procédé de stabilisation d'un réseau électrique par délestage de charges lorsque la fréquence du réseau chute. Ce procédé pourra également être utilisé pour enrayer une hausse de fréquence liée à un excès de production par rapport à la consommation. Le problème se pose plus particulièrement dans le cas où des générateurs décentralisés, par exemple des éoliennes ou des panneaux solaires, sont connectés à des sous-réseaux. On pourra alors prévoir de déconnecter successivement ou par tranches successives ces générateurs de sorte que la variation de puissance retirée du réseau soit quasiment linéaire par rapport à la variation de la fréquence du réseau.

On a décrit en relation avec les figures 3 et 4 des modes de réalisation d'un procédé de stabilisation en fréquence d'un réseau électrique lorsque la fréquence du réseau varie d'une fréquence haute $f_a$ à une fréquence basse $f_b$, dans lequel, pour chaque sous-réseau alimenté par le réseau électrique, une fréquence seuil est calculée pour chacun des N sites consommateurs du sous-réseau. Dans chaque site, des charges délestables sont débranchées quand la fréquence seuil correspondante est atteinte. Ainsi, lorsque la fréquence du réseau atteint la fréquence $f_b$, les N sites d'un sous-réseau ont débranché leurs charges délestables.

A titre de variante, les inventeurs proposent de ne calculer des fréquences seuils que pour certains des sites du sous-réseau. Dans un sous-réseau 22 comprenant, à titre d'exemple N=15 sites consommateurs, on considère le cas où on souhaite que, lorsque la fréquence du réseau varie de $f_a$ à $f_b$, la variation de puissance délestée sur le sous-réseau en fonction de la fréquence du réseau s'approche le plus possible d'une droite de pente prédéterminée A. La pente A est par exemple une consigne fournie au gestionnaire de sous-réseau par un gestionnaire du réseau électrique, par exemple par RTE dans le cas d'un sous-réseau situé en France.

Comme cela a été décrit précédemment en relation avec les figures 3 et 4, le gestionnaire a numéroté les N sites consommateurs de 1 à 15, et, pour chaque site j, a calculé une puissance délestable estimée $P_j$ à partir de la mesure de la puissance délestable instantanée consommée par les charges délestables de ce site.

Le gestionnaire de sous-réseau calcule alors la puissance à délester P sur le sous-réseau pour que P=$(f_b-f_a)$*A.

En pratique, la puissance à délester P est inférieure à la puissance maximale $P_{tot} = \sum_{i=1}^{N} P_i .$ qui peut être délestée sur le sous-réseau. Le gestionnaire de sous-réseau choisit un nombre M, par exemple 10, de sites tel que la somme des puissances délestables estimées de ces M sites soit égale à la puissance à délester P, autrement dit tel que $P = \sum_{i=1}^{M} P_i .$ A cette étape, le gestionnaire de sous-réseau peut être amené à renuméroter les sites dans un ordre différent pour que les M sites choisis soient numérotés de 1 à M. Le gestionnaire de sous-réseau calcule ensuite une fréquence seuil $fs_j$ pour chacun des M sites consommateurs comme cela est décrit en relation avec les figures 3 et 4 et en utilisant les formules (1) et (2) dans lesquelles N est remplacé par M.

On comprend alors que les sites consommateurs numérotés de M+1 à N constituent une réserve de puissance délestable du sous-réseau.

Ainsi, dans le cas où la puissance délestable instantanée de l'un des sites consommateurs numérotés de 1 à M s'écarte, par exemple de plus de 10 %, de la puissance délestable estimée de ce site, le gestionnaire de sous-réseau recommence le calcul des fréquences seuils en utilisant un ou plusieurs des sites numérotés de M+1 à N pour garantir la valeur de la puissance à délester P, et ainsi garantir la pente A. De préférence, si le gestionnaire recommence le calcul des fréquences seuils alors que certains sites ont déjà déconnecté leurs charges délestables, le numéro d'ordre de ces sites n'est pas modifié. A titre de premier exemple, dans le cas où M=10, et où le site consommateur numéroté 5 a sa puissance délestable instantanée qui augmente de plus de 10 % par rapport à sa puissance délestable estimée $P_5$, si le site en réserve numéroté 13 a une puissance délestable estimée $P_{13}$ sensiblement égale à la valeur initiale de $P_5$, le gestionnaire de sous-réseau peut échanger le numéro d'ordre de ces deux sites. A titre de deuxième exemple, dans le cas où M=10, si le site consommateur 5 a sa puissance délestable instantanée qui diminue d'une quantité correspondant à plus de 10 % de sa puissance délestable estimée $P_5$, et si un des sites en réserve, par exemple le site 14, a sa puissance délestable estimée $P_{14}$ sensiblement égale à cette quantité, le gestionnaire de sous-réseau peut affecter la fréquence seuil $fs_5$ au site 14 comme au site 5. Ainsi, lorsque la fréquence du réseau passe en dessous de la fréquence seuil $fs_5$, les sites 5 et 14 déconnectent leurs charges délestables entraînant une variation de puissance sensiblement égale à la valeur initiale de $P_5$.

Dans chaque sous-réseau, l'utilisation de sites consommateurs en réserve pour garantir la valeur de la puissance à délester P, et donc la pente A, entraîne que la variation de la puissance délestée sur le réseau électrique en fonction de la fréquence du réseau s'approche le plus possible d'une droite de pente A prédéterminée.

On a décrit un procédé de déconnexion des charges délestables d'un sous-réseau tel que la variation de puissance délestée sur ce sous-réseau en fonction de la fréquence du réseau suive une courbe prédéterminée dans le cas où cette courbe est une droite. On pourra également prévoir que la variation de puissance délestée suive une courbe autre qu'une droite, par exemple une courbe ayant une pente faible quand la fréquence du réseau est proche d'une fréquence nominale, par exemple fa, et ayant une pente plus forte quand la fréquence du réseau s'écarte de cette fréquence nominale, par exemple quand elle se rapproche de fb.

**Revendications**

**1.** Procédé de stabilisation entre une fréquence haute, fa, et une fréquence basse, fb, d'un réseau électrique alimentant plusieurs sous-réseaux (22), chaque sous-réseau étant associé à un gestionnaire de sous-réseau (24) et alimentant une pluralité, N, de sites consommateurs (28), chaque site, j, comportant des charges non délestables (32) et des charges délestables (34), le procédé comprenant pour chaque sous-réseau les étapes suivantes :

assurer une communication à distance entre chaque site et son gestionnaire de sous-réseau ;
mesurer périodiquement au niveau de chaque site la valeur de la puissance délestable instantanée consommée par les charges délestables du site ;
déduire pour chaque site une puissance délestable estimée, $P_j$, pour une période à venir ;
fixer un ordre 1 à N dans lequel les N sites déconnectent leurs charges délestables (34) ; et
envoyer à chaque site j (28) une fréquence seuil, $fs_j$, telle que des charges délestables (34) de ce site sont débranchées quand la fréquence du réseau descend sous la fréquence seuil $fs_j$, **caractérisé en ce que** le gestionnaire de sous-réseau (24) calcule les fréquences seuils à partir des puissances délestables estimées de sorte que la variation des puissances délestées en fonction de la fréquence soit aussi linéaire que possible.

**2.** Procédé selon la revendication 1, comprenant les étapes suivantes :

calculer et associer à chaque site, j, un intervalle de fréquence, $[F_{min(j)}, F_{max(j)}]$, en appliquant les formules suivantes :

$$F_{max(j)} = fa + (fb - fa) \times \left( \sum_{i=1}^{j-1} P_i \Big/ \sum_{i=1}^{N} P_i \right)$$

$$F_{min(j)} = fa + (fb - fa) \times \left( \sum_{i=1}^{j} P_i \Big/ \sum_{i=1}^{N} P_i \right)$$

où $P_i$ est la puissance délestable estimée du site d'indice i ; et
choisir les fréquences seuils $fs_j$ à l'intérieur de l'intervalle $[F_{min(j)}, F_{max(j)}]$.

**3.** Procédé selon la revendication 2, dans lequel la fréquence de seuil $fs_j$ de chaque site j (28) est choisie au milieu de l'intervalle $[F_{min(j)}, F_{max(j)}]$.

**4.** Procédé selon l'une quelconque des revendications 1 à 3, dans lequel la puissance délestable estimée, $P_j$, d'un site j est déduite de la valeur de la puissance délestable instantanée de ce site et d'un historique de consommation des charges délestables (34) de ce site.

**5.** Procédé selon l'une quelconque des revendications 1 à 4, dans lequel l'ordre 1 à N dans lequel les N sites déconnectent leurs charges délestables (34) est périodiquement modifié.

**6.** Procédé selon l'une quelconque des revendications 1 à 5, dans lequel la puissance délestable instantanée consommée par les charges délestables (34) d'un site est mesurée suite à une requête du gestionnaire de sous-réseau (24).

**7.** Procédé selon l'une quelconque des revendications 1 à 6, dans lequel les charges délestables (34) d'un site j sont rebranchées une fois que la fréquence du réseau est repassée au-dessus de la fréquence seuil $fs_j$ de ce site.

**8.** Procédé selon l'une quelconque des revendications 1 à 7, dans lequel le sous-réseau comprend en outre des seconds sites comportant des générateurs délestables, le procédé consistant à envoyer à chaque second site une fréquence seuil telle que les générateurs délestables sont débranchés lorsque la fréquence du réseau passe au-dessus de la fréquence seuil du site.

**9.** Système de stabilisation d'un réseau électrique alimentant plusieurs sous-réseaux (22), chaque sous-réseau alimentant une pluralité, N, de sites consommateurs (28), chaque site, j, comportant des charges non délestables (32) et des charges délestables (34), ce système comprenant :

au niveau de chaque site, au moins un compteur (38) pour mesurer périodiquement la valeur de la puissance délestable instantanée consommée par les charges délestables du site, et, associé à chacun desdits au moins un compteur, un commutateur (40) de déconnexion des charges délestables (34) du site quand la fréquence du réseau chute en dessous d'une fréquence seuil, fs$_j$ ;

un gestionnaire de sous-réseau (24) associé à chaque sous-réseau comprenant des moyens pour calculer des fréquences seuils ;

des moyens de communication (26) à distance entre chaque gestionnaire de sous-réseau et les sites associés ; et

au niveau de chaque site ou au niveau du gestionnaire, des moyens de détermination sur une période d'une puissance délestable estimée, P$_j$, **caractérisé en ce que** les moyens de calcul des fréquences seuils sont configurés pour effectuer ledit calcul à partir des puissances délestables estimées de sorte que la variation des puissances délestées en fonction de la fréquence soit aussi linéaire que possible.

**Patentansprüche**

1. Ein Verfahren zur Stabilisierung zwischen einer Hochfrequenz, fa, und einer Niederfrequenz, fb, eines elektrischen Netzwerks, das eine Vielzahl von Sub-Netzwerken (22) betreibt, wobei jedes Sub-Netzwerk mit einem Sub-Netzwerk-Manager (24) assoziiert ist und eine Vielzahl, N, von Konsumenten-Standorten (28) betreibt, wobei jeder Standort, j, nicht-abschaltbare Verbraucher (32) und abschaltbare Verbraucher (34) aufweist, wobei das Verfahren für jedes Sub-Netzwerk die folgenden Schritte aufweist:

   Bereitstellen einer Fern-Kommunikation zwischen jedem Standort und seinem Netzwerkmanager;
   periodisches Messen, am Ort jedes Standorts, des Wertes der Momentanleistung, die durch die abschaltbaren Verbraucher des Standorts verbraucht wird und reduziert werden könnte;
   Abteilen für jeden Standort einer geschätzten Leistung, P$_j$, die geeignet ist für eine anstehende Periode reduziert zu werden,;
   Einführen einer Reihenfolge 1 bis N, in welcher der N-Standort seinen abschaltbaren Verbraucher (34) trennt bzw. abschaltet; und
   Senden an jeden Standort j (28) einer Grenzwertfrequenz, fs$_j$, so dass die abschaltbaren Verbraucher (34) dieses Standorts abgeschaltet werden, wenn die Netzwerk-Frequenz unter die Grenzwertfrequenz fs$_j$ fällt, **dadurch gekennzeichnet, dass** der Sub-Netzwerkmanager (24) die Grenzwertfrequenzen berechnet basierend auf den geschätzten Leistungen, die geeignet sind reduziert zu werden, so dass die Schwankung der Reduzier-Leistungen gemäß der Frequenz so linear wie möglich ist.

2. Verfahren nach Anspruch 1, das die folgenden Schritte aufweist:

   Berechnen und Assoziieren mit jedem Standort, j, eines Frequenzintervalls [Fmin $_{(j)}$, Fmax $_{(j)}$] durch Anwenden der folgenden Formeln:

$$F_{max(j)} = fa + (fb - fa) \times \left( \sum_{i=1}^{j-1} P_i \bigg/ \sum_{i=1}^{N} P_i \right)$$

$$F_{min(j)} = fa + (fb - fa) \times \left( \sum_{i=1}^{j} P_i \bigg/ \sum_{i=1}^{N} P_i \right)$$

   wobei Pi die geschätzte Leistung ist, die geeignet ist von dem Standort des Index i reduziert zu werden; und
   Auswählen von Grenzwertfrequenzen Fs$_j$ innerhalb des Intervalls [Fmin $_{(j)}$, Fmax $_{(j)}$].

3. Verfahren nach Anspruch 2, wobei die Grenzwertfrequenz fs$_j$ jedes Standortes j (28) in der Mitte des Intervalls [Fmin $_{(j)}$, Fmax $_{(j)}$] auswählt wird.

4. Verfahren nach einem der Ansprüche 1 bis 3, wobei die geschätzte Leistung, P$_j$, die geeignet ist an einem Standort j reduziert zu werden, von dem Wert der Momentanleistung abgeleitet wird, die geeignet ist an diesem Standort reduziert zu werden und von einer Leistungsverbrauchshistorie der abschaltbaren Verbraucher (34) dieses Standorts.

**5.** Verfahren nach einem der Ansprüche 1 bis 4, wobei die Reihenfolge 1 bis N, in welcher die N-Standorte ihre abschaltbaren Verbraucher (34) abschalten, periodisch modifiziert wird.

**6.** Verfahren nach einem der Ansprüche 1 bis 5, wobei die Momentanleistung, die durch die abschaltbaren Verbraucher (34) eines Standorts verbraucht wird und reduziert werden könnte, nach einer Anfrage von dem Sub-Netzwerkmanager (24) gemessen wird.

**7.** Verfahren nach einem der Ansprüche 1 bis 6, wobei die abschaltbaren Verbraucher (34) eines Standorts j wieder eingeschaltet werden, wenn die Netzwerkfrequenz über die Grenzwertfrequenz $fs_j$ des Standorts wieder angestiegen ist.

**8.** Verfahren nach einem der Ansprüche 1 bis 7, wobei das Sub-Netzwerk ferner zweite Standorte mit abschaltbaren Generatoren aufweist, wobei das Verfahren das Senden einer Grenzwertfrequenz zu jedem der zweiten Standorte aufweist, so dass die abschaltbaren Generatoren abgeschaltet werden, wenn die Netzwerkfrequenz über die Grenzwertfrequenz des Standortes ansteigt.

**9.** System zum Stabilisieren eines elektrischen Netzwerkes, das eine Vielzahl von Sub-Netzwerken (22) betreibt, wobei jedes Sub-Netzwerk eine Vielzahl, N, von Konsumenten-Standorten (28) betreibt, wobei jeder Standort, j, nichtabschaltbare Verbraucher (32) und abschaltbare Verbraucher (34) aufweist, wobei das System Folgendes aufweist:

am Ort jedes Standortes wenigstens einen Zähler (38) zum periodischen Messen des Wertes der Momentanleistung, die durch die abschaltbaren Verbraucher des Standorts verbraucht wird und reduziert werden könnte, und assoziiert mit jedem des wenigstens einen Zählers eines Schalters (40) zum Abschalten der abschaltbaren Verbraucher (34) des Standortes, wenn die Netzwerkfrequenz unter eine Grenzwertfrequenz $fs_j$ fällt;
ein Sub-Netzwerkmanager (24), der mit jedem Sub-Netzwerk assoziiert ist, der Mittel zum Berechnen der Grenzwertfrequenzen aufweist;
Mittel zur Fern-Kommunikation (26) zwischen jedem Sub-Netzwerkmanager und den assoziierten Standorten; und
am Ort jedes Standortes oder am Managerort Mittel zum Bestimmen einer geschätzten Leistung $P_j$ über einen Zeitraum hinweg, die geeignet ist reduziert zu werden,
**dadurch gekennzeichnet, dass** die Mittel zum Berechnen der Grenzwertfrequenzen konfiguriert sind zum Durchführen der Berechnung basierend auf geschätzten Leistungen, die geeignet sind reduziert zu werden, so dass die Schwankung der Reduzier-Leistungen gemäß der Frequenz so linear wie möglich ist.

**Claims**

**1.** A method of stabilizing, between a high frequency, fa, and a low frequency, fb, an electrical network powering a plurality of sub-networks (22), each sub-network being associated with a sub-network manager (24) and powering a plurality, N, of consumer sites (28), each site, j, comprising non-sheddable loads (32) and sheddable loads (34), the method comprising, for each sub-network, the steps of:

ensuring a remote communication between each site and its sub-network manager;
periodically measuring at the level of each site the value of the instantaneous power capable of being cut back consumed by the sheddable loads of the site;
deducing for each site an estimated power capable of being cut back, $P_j$, for an upcoming period;
setting an order 1 to N in which the N sites disconnect their sheddable loads (34); and
sending to each site j (28) a threshold frequency, $fs_j$, such that sheddable loads (34) of this site are disconnected when the network frequency falls below threshold frequency $fs_j$, caracterized in that the sub-network manager (24) calculates the threshold frequencies based on the estimated powers capable of being cut back so that the variation of the cutback powers according to frequency is as linear as possible.

**2.** The method of claim 1, comprising the steps of:

calculating and associating with each site, j, a frequency interval $[F_{min(j)}, F_{max(j)}]$, by applying the following formulas:

$$F_{max(j)} = fa + (fb - fa) \times \left( \sum_{i=1}^{j-1} P_i \bigg/ \sum_{i=1}^{N} P_i \right)$$

$$F_{min(j)} = fa + (fb - fa) \times \left( \sum_{i=1}^{j} P_i \bigg/ \sum_{i=1}^{N} P_i \right)$$

where $P_i$ is the estimated power capable of being cut back from the site of index i; and
selecting threshold frequencies $fs_j$ within interval $[F_{min(j)}, F_{max(j)}]$.

3. The method of claim 2, wherein the threshold frequency $fs_j$ of each site j (28) is selected in the middle of interval $[F_{min(j)}, F_{max(j)}]$.

4. The method of any of claims 1 to 3, wherein the estimated power, $P_j$, capable of being cut back of a site j is deduced from the value of the instantaneous power capable of being cut back of this site and from a power consumption history of the sheddable loads (34) of this site.

5. The method of any of claims 1 to 4, wherein the order 1 to N in which the N sites disconnect their sheddable loads (34) is periodically modified.

6. The method of any of claims 1 to 5, wherein the instantaneous power capable of being cut back consumed by the sheddable loads (34) of a site is measured after a request from the sub-network manager (24).

7. The method of any of claims 1 to 6, wherein the sheddable loads (34) of a site j are connected back once the network frequency has risen back above the threshold frequency $fs_j$ of this site.

8. The method of any of claims 1 to 7, wherein the sub-network further comprises second sites comprising sheddable generators, the method comprising sending to each second site a threshold frequency such that the sheddable generators are disconnected when the network frequency rises above the threshold frequency of the site.

9. A system for stabilizing an electrical network powering a plurality of sub-networks (22), each sub-network powering a plurality, N, of consumer sites (28), each site, j, comprising non-sheddable loads (32) and sheddable loads (34), the system comprising:

   at the level of each site, at least one meter (38) for periodically measuring the value of the instantaneous power capable of being cut back consumed by the sheddable loads of the site and, associated with each of said at least one meter, a switch (40) for disconnecting the sheddable loads (34) of the site when the network frequency falls below a threshold frequency $fs_j$;
   a sub-network manager (24) associated with each sub-network comprising means for calculating threshold frequencies;
   means of remote communication (26) between each sub-network manager and the associated sites; and
   at the level of each site or at the manager level, means for determining over a period an estimated power, $P_j$, capable of being cut back,

   caracterized in that the means for calculating threshold frequencies are configured to perform said calculation based on estimated powers capable of being cut back so that the variation of the cutback powers according to frequency is as linear as possible.

Fig 1

Fig 2

Fig 3

Fig 4

**RÉFÉRENCES CITÉES DANS LA DESCRIPTION**

**Documents brevets cités dans la description**

- FR 1362664
- US 6314378 B
- US 20090299540 A

**Littérature non-brevet citée dans la description**

- **D.L.H. AIK.** A General-Order System Frequency Response Model Incorporating Load Shedding: Analytic Modeling and Applications. *IEEE Transactions On Power Systems,* 31 Mai 2006, vol. 21 (2